# EUROPEAN PATENT APPLICATION

(11) **EP 4 679 277 A1**
(43) Date of publication of application: **14.01.2026**
(21) Application number: 25186557.2
(22) Date of filing: 01.07.2025
(51) Int. Cl.: G06F 12/0871, G06F 12/0888, G06F 12/0862

(54) **SYSTEM AND METHOD FOR CACHING IN A STORAGE DEVICE**

(30) Priority: 08.07.2024 US 202463668703 P; 31.12.2024 US 202419007171
(71) Applicant: Samsung Electronics Co., Ltd., Suwon-si, Gyeonggi-do 16677 (KR)
(72) Inventor: SUN, Yiqiu, San Jose, CA 95134 (US); MADDUMA PATABANDI, Tharindu Rusira Kumara, San Jose, CA 95134 (US); PEI, Shuyi, San Jose, CA 95134 (US); LI, Zongwang, San Jose, CA 95134 (US); PITCHUMANI, Rekha, San Jose, CA 95134 (US); SAXENA, Mayank, San Jose, CA 95134 (US); PINTO, Oscar, San Jose, CA 95134 (US)
(74) Representative: Kuhnen & Wacker Patent- und Rechtsanwaltsbüro PartG mbB

(57) **Abstract**

A system and method for caching in a storage device are provided. In some embodiments, a storage device includes: a control circuit; non-volatile memory; and a cache. The control circuit may be configured: to receive, from a host, a caching hint identifying a first address; to read a first quantity of data from the non-volatile memory; and to store a portion of the first quantity of data in the cache, the first quantity being larger than the portion, the portion including a first data unit, having an address equal to the first address.

## Description

### FIELD

One or more aspects of embodiments according to the present disclosure relate to storage, and more particularly to a system and method for caching in a storage device.

### BACKGROUND

Storage devices, such as solid-state drives, may be used to store data in a computing system, in which a host may be connected to a storage device. In response to a read command, the storage device may read data from, e.g., non-volatile memory in the storage device, and return data to the host.

It is with respect to this general technical environment that aspects of the present disclosure are related.

### OBJECTIVE OF THE DISCLOSURE

An objective of the disclosure is to provide a storage device having reduced read latency.

### SUMMARY

According to an embodiment of the present disclosure, there is provided a storage device, including: a control circuit; non-volatile memory; and a cache, wherein the control circuit is configured: to receive, from a host, a caching hint identifying a first address, to read a first quantity of data from the non-volatile memory, and to store a portion of the first quantity of data in the cache, wherein the first quantity is larger than the portion, the portion including a first data unit, having an address equal to the first address.

In some embodiments: the portion of the first quantity of data further includes a second data unit having a second address, and the control circuit is further configured: to receive a host read command from the host, the host read command including the second address, and to store the second data unit in the cache based on the host read command.

In some embodiments, the storing of the portion of the first quantity of data in the cache includes: storing the portion of the first quantity of data in a first portion of the cache, and storing the first data unit and the second data unit together in a bin of the first portion of the cache.

In some embodiments: the portion of the first quantity of data further includes a third data unit having a third address, the third address is stored in a history table, and the control circuit is further configured to store the third data unit in the cache based on the third address being stored in the history table.

In some embodiments, the storing of the portion of the first quantity of data in a first portion of the cache includes storing the portion of the first quantity of data in a first portion of the cache based on: the caching hint, or the first address being stored in the history table.

In some embodiments, the control circuit is further configured: to receive a host read command, the host read command including a fourth address, to read a fourth data unit from the non-volatile memory at the fourth address, and to store the fourth data unit in a second portion of the cache, the storing of the fourth data unit in the second portion of the cache including storing the fourth data unit independently of other data units.

In some embodiments, the control circuit is further configured: to evict the fourth data unit from the cache, and in response to evicting the fourth data unit from the cache, to add an address of the fourth data unit to the history table.

According to an embodiment of the present disclosure, there is provided a method, including: receiving, by a control circuit of a storage device, from a host, a caching hint identifying a first address; reading, a first quantity of data from a non-volatile memory of the storage device; and storing a portion of the first quantity of data in a cache of the storage device, wherein the first quantity being larger than the portion, the portion including a first data unit, having an address equal to the first address.

In some embodiments: the portion of the first quantity of data includes a second data unit having a second address, and the method further includes: receiving a host read command from a host, the host read command including the second address; and storing the second data unit in the cache based on the host read command.

In some embodiments, the storing of the portion of the first quantity of data in the cache includes: storing the portion of the first quantity of data in a first portion of the cache; and storing the first data unit and the second data unit together in a bin of the first portion of the cache.

In some embodiments: the portion of the first quantity of data includes a third data unit having a third address; the third address is stored in a history table; and the method further includes storing the third data unit in the cache based on the third address being stored in the history table.

In some embodiments, the storing of the portion of the first quantity of data in a first portion of the cache includes storing the portion of the first quantity of data in a first portion of the cache based on: the caching hint, or the first address being stored in the history table.

In some embodiments, the method further includes: receiving a host read command, the host read command including a fourth address; reading a fourth data unit from the non-volatile memory at the fourth address; and storing the fourth data unit in a second portion of the cache, the storing of the fourth data unit in the second portion of the cache including storing the fourth data unit independently of other data units.

In some embodiments, the method further includes: evicting the fourth data unit from the cache; and in response to evicting the fourth data unit from the cache, adding an address of the fourth data unit to the history table.

According to an embodiment of the present disclosure, there is provided a system, including: a host; and storage device, the storage device including: non-volatile memory; and a cache, wherein the storage device is configured: to receive, from a host, a caching hint identifying a first address, to read a first quantity of data from the non-volatile memory, and to store a portion of the first quantity of data in the cache, wherein the first quantity is larger than the portion, the portion including a first data unit, having an address equal to the first address.

In some embodiments: the portion of the first quantity of data includes a second data unit having a second address, and the storage device is further configured: to receive a host read command from a host, the host read command including the second address, and to store the second data unit in the cache based on the host read command.

In some embodiments, the storing of the portion of the first quantity of data in the cache includes: storing the portion of the first quantity of data in a first portion of the cache, and storing the first data unit and the second data unit together in a bin of the first portion of the cache.

In some embodiments: the portion of the first quantity of data includes a third data unit having a third address, the third address is stored in a history table, and the storage device is configured to store the third data unit in the cache based on the third address being stored in the history table.

In some embodiments, the storing of the portion of the first quantity of data in a first portion of the cache includes storing the portion of the first quantity of data in a first portion of the cache based on: the caching hint, or the first address being stored in the history table.

In some embodiments, the storage device is further configured: to receive a host read command, the host read command including a fourth address, to read a fourth data unit from the non-volatile memory at the fourth address, and to store the fourth data unit in a second portion of the cache, the storing of the fourth data unit in the second portion of the cache including storing the fourth data unit independently of other data units.

### ADVANTAGEOUS EFFECT OF THE DISCLOSURE

According to embodiments of the present disclosure, by using a cache of a storage device, a read command from a host device may not always cause a read to a non-volatile memory of the storage device. Further, by implementing two caching schemes on the cache of the storage device, the cache is used effectively. Thus, the storage device having reduced read latency is provided.

### BRIEF DESCRIPTION OF THE DRAWINGS

These and other features and advantages of the present disclosure will be appreciated and understood with reference to the specification, claims, and appended drawings wherein:
FIG. 1A is a block diagram of a host and a storage device, according to an embodiment of the present disclosure;
FIG. 1B is a system level block diagram, according to an embodiment of the present disclosure;
FIG. 1C is a block diagram of a storage device, according to an embodiment of the present disclosure;
FIG. 2 is a block diagram of a host and a storage device, according to an embodiment of the present disclosure;
FIG. 3A is an illustration of a history table, according to an embodiment of the present disclosure;
FIG. 3B is a flow chart of a method for selecting a caching scheme, according to an embodiment of the present disclosure;
FIG. 4 is a table illustrating characteristics of two caching schemes, according to an embodiment of the present disclosure; and
FIG. 5 is a flow chart of a method for caching, according to an embodiment of the present disclosure.

### DETAILED DESCRIPTION

The detailed description set forth below in connection with the appended drawings is intended as a description of exemplary embodiments of a system and method for caching in a storage device provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

In some embodiments, the non-volatile memory of a storage device such as a solid-state drive may have a read granularity of 4 kB. This read granularity may be sufficiently coarse that, for data lacking high locality, a considerable fraction of the bandwidth in the host interface may be wasted. As such, some interface protocols for the host interface 106, e.g., Compute Express Link (CXL), may enable read and write operations at smaller granularity, e.g., at the granularity of a cache line (e.g., 64 bytes). In a storage device with a host interface having a read granularity that is significantly finer than the read granularity of the non-volatile memory of the storage device, it may be advantageous to implement caching of read data in the storage device, so that a read command received from the host device does not always result in reading (at the coarser granularity) from the non-volatile memory. Moreover, if the locality of the data is relatively low, it may be advantageous for the caching to be performed at the finer read granularity (that of the host interface), so that space in the cache may be more efficiently used.

When a read command is received from a host (the read command requesting a data unit (e.g., a cache line)), the data unit may, if it is not stored in the cache, be fetched, as part of a larger volume of data (e.g., as part of a page of data) from the non-volatile memory. The data unit requested by the host may then be cached (e.g., stored in the cache), and returned to the host. The remainder of the larger volume of data may be discarded, or some other data units within the larger volume of data may also be stored in the cache. These other data units may be identified based on (i) a history table (a table used to store addresses of data units that have been read in the past), or (ii) caching hints, sent to the storage device by the host. The history table may be updated whenever an eviction is performed with the addresses of all evicted data units being added to the history table.

The cache may include (e.g., be separated into) two portions, a first, less sparse portion, and a second, sparse portion. In the first portion, multiple data units may be saved, per page, with the data units associated with a page being stored together in a bin in the first portion of the cache. The data units in a bin may share a tag. In the second portion, data units may be saved independently, with, e.g., each such data unit not sharing a bin nor a tag with other data units.

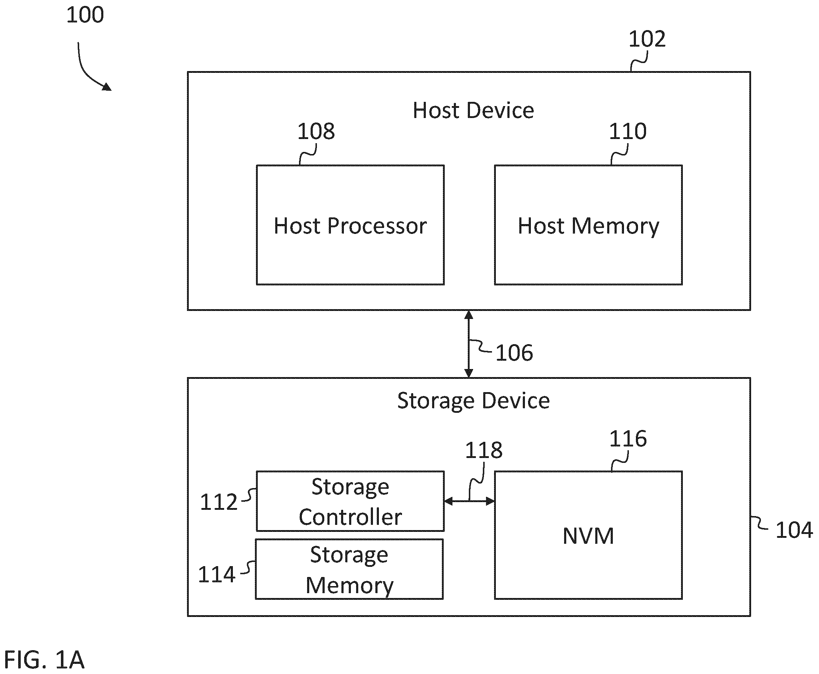

FIG. 1A illustrates a system, which may be referred to as a "target" 100, according to some embodiments of the present disclosure. Referring to FIG. 1A, the target 100 may include a host device 102 and a storage device 104 (which may be a persistent storage device 104). In some embodiments, the host device 102 may be housed with the storage device 104, and in other embodiments, the host device 102 may be separate from the storage device 104. The host device 102 may include any suitable computing device connected to a storage device 104 such as, for example, a personal computer (PC), a portable electronic device, a hand-held device, a laptop computer, or the like.

The host device 102 may be connected to the storage device 104 over a host interface 106. The host device 102 may issue data request commands or input-output (IO) commands (for example, read or write commands) to the storage device 104 over the host interface 106, and may receive responses from the storage device 104 over the host interface 106.

The host device 102 may include a host processor 108 and host memory 110. The host processor 108 may be a processing circuit (discussed in further detail below), for example, such as a general-purpose processor or a central processing unit (CPU) core of the host device 102. The host processor 108 may be connected to other components via an address bus, a control bus, a data bus, or the like. The host memory 110 may be considered as high performing main memory (for example, primary memory) of the host device 102. For example, in some embodiments, the host memory 110 may include (or may be) volatile memory, for example, such as dynamic random-access memory (DRAM). However, the present disclosure is not limited thereto, and the host memory 110 may include (or may be) any suitable high performing main memory (for example, primary memory) replacement for the host device 102 as would be known to those skilled in the art. For example, in other embodiments, the host memory 110 may be relatively high performing non-volatile memory, such as NAND flash memory, Phase Change Memory (PCM) (a type of memory that stores information using, in each memory cell, a change in resistance that accompanies a phase change in a material (e.g., a chalcogenide) in the cell), Resistive RAM (a type of memory in which a current through a controllable resistor (or "memristor") changes its resistance, to store information), Spin-transfer Torque RAM (STTRAM) (a memory in which a spin-polarized current may be used to change the magnetization of a magnetic layer of a memory cell), any suitable memory based on PCM technology, or resistive random access memory (ReRAM), and may include, for example, or the like.

The storage device 104 may operate as secondary memory that may persistently store data accessible by the host device 102. In this context, the storage device 104 may include relatively slower memory when compared to the high performing memory of the host memory 110. For example, in some embodiments, the storage device 104 may be secondary memory of the host device 102, for example, such as a Solid-State Drive (SSD). However, the present disclosure is not limited thereto, and in other embodiments, the storage device 104 may include (or may be) any suitable storage device such as, for example, a magnetic storage device (for example, a hard disk drive (HDD), or the like), an optical storage device (for example, a Blue-ray disc drive, a compact disc (CD) drive, a digital versatile disc (DVD) drive, or the like), other kinds of flash memory devices (for example, a USB flash drive, and the like), or the like. In various embodiments, the storage device 104 may conform to a large form factor standard (for example, a 3.5-inch hard drive form-factor), a small form factor standard (for example, a 2.5 inch hard drive form-factor), an M.2 form factor, an E1.S form factor, or the like. In other embodiments, the storage device 104 may conform to any suitable or desired derivative of these form factors. For convenience, the storage device 104 may be described hereinafter in the context of a solid-state drive, but the present disclosure is not limited thereto.

The storage device 104 may be communicably connected to the host device 102 over the host interface 106. The host interface 106 may facilitate communications (for example, using a connector and a protocol) between the host device 102 and the storage device 104. In some embodiments, the host interface 106 may facilitate the exchange of storage requests (or "commands") and responses (for example, command responses) between the host device 102 and the storage device 104. In some embodiments, the host interface 106 may facilitate data transfers by the storage device 104 to and from the host memory 110 of the host device 102. For example, in various embodiments, the host interface 106 (for example, the connector and the protocol thereof) may include (or may conform to) Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabrics (NVMe-oF), or the like. In other embodiments, the host interface 106 (for example, the connector and the protocol thereof) may include (or may conform to) various general-purpose interfaces, for example, such as Ethernet, Universal Serial Bus (USB), and/or the like.

In some embodiments, the storage device 104 may include a storage controller 112, storage memory 114 (which may also be referred to as a buffer), non-volatile memory (NVM) 116, and a storage interface 118. The storage memory 114 may be high-performing memory of the storage device 104, and may include (or may be) volatile memory, for example, such as DRAM, but the present disclosure is not limited thereto, and the storage memory 114 may be any suitable kind of high-performing volatile or non-volatile memory. The non-volatile memory 116 may persistently store data received, for example, from the host device 102. The non-volatile memory 116 may include, for example, NAND flash memory, but the present disclosure is not limited thereto, and the non-volatile memory 116 may include any suitable kind of memory for persistently storing the data according to an implementation of the storage device 104 (for example, magnetic disks, tape, optical disks, or the like).

The storage controller 112 may be connected to the non-volatile memory 116 over the storage interface 118. In the context of the SSD, the storage interface 118 may be referred to as flash channel, and may be an interface with which the non-volatile memory 116 (for example, NAND flash memory) may communicate with a processing component (for example, the storage controller 112) or other device. Commands such as reset, write enable, control signals, clock signals, or the like may be transmitted over the storage interface 118. Further, a software interface may be used in combination with a hardware element that may be used to test or verify the workings of the storage interface 118. The software may be used to read data from and write data to the non-volatile memory 116 via the storage interface 118. Further, the software may include firmware that may be downloaded onto hardware elements (for example, for controlling write, erase, and read operations).

The storage controller 112 (which may be a processing circuit (discussed in further detail below)) may be connected to the host interface 106, and may manage signaling over the host interface 106. In some embodiments, the storage controller 112 may include an associated software layer (for example, a host interface layer) to manage the physical connector of the host interface 106. The storage controller 112 may respond to input or output requests received from the host device 102 over the host interface 106. The storage controller 112 may also manage the storage interface 118 to control, and to provide access to and from, the non-volatile memory 116. For example, the storage controller 112 may include at least one processing component embedded therein for interfacing with the host device 102 and the non-volatile memory 116. The processing component may include, for example, a general purpose digital circuit (for example, a microcontroller, a microprocessor, a digital signal processor, or a logic device (for example, a field programmable gate array (FPGA), an application-specific integrated circuit (ASIC), or the like)) capable of executing data access instructions (for example, via firmware or software) to provide access to the data stored in the non-volatile memory 116 according to the data access instructions. For example, the data access instructions may correspond to the data request commands, and may include any suitable data storage and retrieval algorithm (for example, read, write, or erase) instructions, or the like.

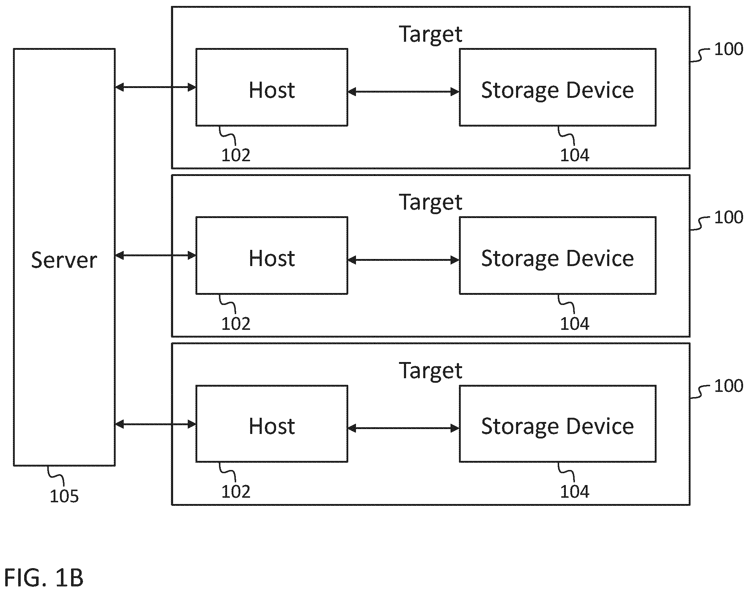

FIG. 1B is a system-level diagram, in some embodiments. Within each target 100, a host device 102 is connected to a persistent storage device 104 (which may be, for example, a solid-state drive (SSD)). The persistent storage device 104 may have (as discussed above) a form factor that is any one of a plurality of form factors suitable for persistent storage devices, including but not limited to 2.5", 1.8", MO-297, MO-300, M.2, and Enterprise and Data Center SSD Form Factor (EDSFF), and it may have an electrical interface (which may be referred to as a "host interface"), through which it may be connected to the host device 102, that is any one of a plurality of interfaces suitable for persistent storage devices, including Peripheral Component Interconnect (PCI), PCI express (PCIe), Ethernet, Small Computer System Interface (SCSI), Serial AT Attachment (SATA), and Serial Attached SCSI (SAS) or Universal Flash Storage (UFS). The persistent storage device 104 may include an interface circuit which operates as an interface adapter between the host interface 106 and one or more internal interfaces in the persistent storage device 104.

The host interface may be used by the host device 102 to communicate with the persistent storage device 104, for example, by sending write and read commands, which may be received, by the persistent storage device 104, through the host interface. The host interface may also be used by the persistent storage device 104 to perform data transfers to and from system memory of the host device 102.

Such data transfers may be performed using direct memory access (DMA). For example, when the host device 102 sends a write command to the persistent storage device 104, the persistent storage device 104 may fetch the data to be written to the non-volatile memory 116 from the host memory 110 of the host device 102 using direct memory access, and the persistent storage device 104 may then save the fetched data to the non-volatile memory 116. Similarly, if the host device 102 sends a read command to the persistent storage device 104, the persistent storage device 104 may read the requested data (i.e., the data specified in the read command) from the non-volatile memory 116 and save it in the host memory 110 of the host device 102 using direct memory access. The persistent storage device 104 may store data in a persistent memory, for example, not-AND (NAND) flash memory, for example, in memory dies containing memory cells, each of which may be, for example, a Single-Level Cell (SLC), a Multi-Level Cell (MLC), or a Triple-Level Cell (TLC).

A Flash Translation Layer (FTL) (discussed in further detail below) of the persistent storage device 104 may provide a mapping between logical addresses used by the host device 102 and physical addresses of the data in the persistent memory. The persistent storage device 104 may also include (i) a buffer which may include (for example, consist of) dynamic random-access memory (DRAM), and (ii) a persistent memory controller (for example, a flash controller) for providing suitable signals to the persistent memory. Some or all of the host interface, the Flash Translation Layer, the buffer, and the persistent memory controller may be implemented in a processing circuit, which may be referred to as the persistent storage device controller.

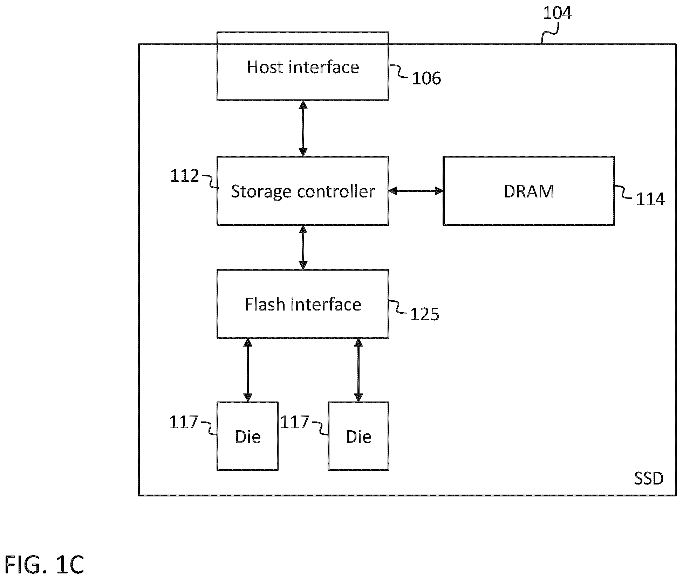

FIG. 1C is a block diagram of a persistent storage device 104 (for example, a solid-state drive), in some embodiments. The host interface 106 is used by the host device 102, to communicate with the persistent storage device 104. The data write and read input output commands, as well as various media management commands such as the Nonvolatile Memory Express (NVMe) Identify command and the NVMe Get Log command may be received, by the persistent storage device 104, through the host interface 106. In some embodiments, the storage device has an interface compatible with a different interface protocol, such as Small Computer System Interface (SCSI), Peripheral Component Interconnect Express (PCIe), Compute Express Link (CXL), remote direct memory access (RDMA) over Ethernet, Serial Advanced Technology Attachment (SATA), Fiber Channel, Serial Attached SCSI (SAS), NVMe over Fabrics (NVMe-oF), or the like. In such embodiments, commands that are similar, identical, or analogous to the Identify command or the Get Log command may be received by the persistent storage device 104, through the host interface 106. The host interface 106 may also be used by the persistent storage device 104 to perform data transfers to and from host system memory. The persistent storage device 104 may store data in non-volatile memory 116 (for example, not-AND (NAND) flash memory), for example, in memory dies 117 containing memory cells, each of which may be (as discussed above), for example, a Single-Level Cell (SLC), a Multi-Level Cell (MLC), or a Triple-Level Cell (TLC). A Flash Translation Layer (FTL), which may be implemented in the storage controller 112 (for example, based on firmware (for example, based on firmware stored in the non-volatile memory 116) may provide a mapping between logical addresses used by the host device 102 and physical addresses of the data in the non-volatile memory 116. The persistent storage device 104 may also include (i) a buffer (for example, the storage memory 114) (which may include, for example, consist of, dynamic random-access memory (DRAM)), and (ii) a flash interface (or "flash controller") 125 for providing suitable signals to the memory dies 117 of the non-volatile memory 116. Some or all of the host interface 106, the Flash Translation Layer (as mentioned above), the storage memory 114 (for example, the buffer), and the flash interface 125 may be implemented in a processing circuit, which may be referred to as the persistent storage device controller 112 (or simply as the storage controller 112).

The NAND flash memory may be read or written at the granularity of a flash page, which may be between 4 kB and 16 kB in size. Before the flash memory page is reprogrammed with new data, it may first be erased. The granularity of an erase operation may be one NAND block, or "physical block", which may include, for example, between 128 and 256 pages. Because the granularity of erase and program operations are different, garbage collection (GC) may be used to free up partially invalid physical blocks and to make room for new data. The garbage collection operation may (i) identify fragmented flash blocks, in which a large proportion (for example, most) of the pages are invalid, and (ii) erase each such physical block. When garbage collection is completed, the pages in an erased physical block may be recycled and added to a free list in the Flash Translation Layer.

The non-volatile memory 116 (for example, if it includes or is flash memory) may be capable of being programmed and erased only a limited number of times. This may be referred to as the maximum number of program/erase cycles (P/E cycles) the non-volatile memory 116 can sustain. To maximize the life of the persistent storage device 104, the persistent storage device controller 112 may endeavor to distribute write operations across all of the physical blocks of the non-volatile memory 116; this process may be referred to as wear leveling.

A mechanism that may be referred to as "read disturb" may reduce persistent storage device 104 reliability. A read operation on a NAND flash memory cell may cause the threshold voltage of nearby unread flash cells in the same physical block to change. Such disturbances may change the logical states of the unread cells, and may lead to uncorrectable error-correcting code (ECC) read errors, degrading flash endurance. To avoid this result, the Flash Translation Layer may have a counter of the total number of reads to a physical block since the last erase operation. The contents of the physical block may be copied to a new physical block, and the physical block may be recycled, when the counter exceeds a threshold (for example, 50,000 reads for Multi-Level Cell), to avoid irrecoverable read disturb errors. As an alternative, in some embodiments, a test read may periodically be performed within the physical block to check the error-correcting code error rate; if the error rate is close to the error-correcting code capability, the data may be copied to a new physical block.

As mentioned above, the non-volatile memory 116 of a storage device 104 such as a solid-state drive may have a read granularity of 4 kB. This read granularity may be sufficiently coarse that for data lacking high locality, a considerable fraction of the bandwidth in the host interface 106 may be wasted. As such, some interface protocols for the host interface 106, e.g., Compute Express Link (CXL), may enable read and write operations at smaller granularity, e.g., at the granularity of a cache line (e.g., 64 bytes). In a storage device 104 with a host interface 106 having a read granularity that is significantly finer than the read granularity of the non-volatile memory 116 of the storage device 104, it may be advantageous to implement caching of read data in the storage device 104, so that a read command received from the host device 102 does not always result in reading (at the coarser granularity) from the non-volatile memory 116. Moreover, if the locality of the data is relatively low, it may be advantageous for the caching to be performed at the finer read granularity (that of the host interface 106), so that space in the cache may be more efficiently used.

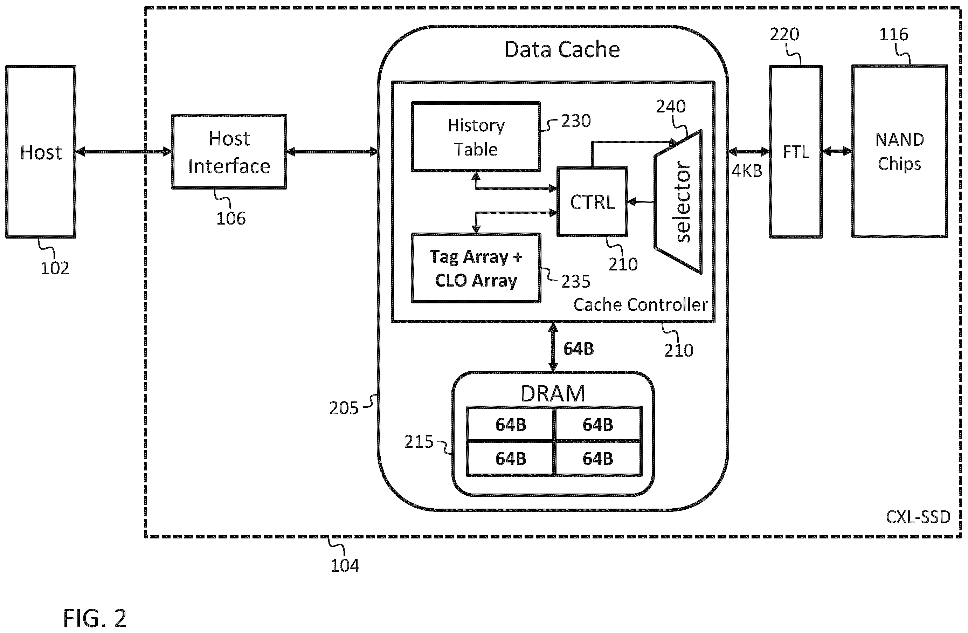

FIG. 2 is a block diagram of a portion of a computing system, including the host device 102 and a storage device 104. The storage device 104 may include the host interface 106, a cache 205 (including a cache controller 210 and a cache memory 215 (which may be a DRAM)), a flash translation layer (FTL) 220, and the non-volatile memory 116 (which may include (e.g., consist of) NAND flash chips)). In operation, the storage device 104 may receive a read command from the host device 102 for a data unit (e.g., a cache line) and, in response, it may (i) check whether the requested data unit is stored in the cache, (ii) if the requested data unit is stored in the cache (e.g., in case of a cache hit) it may return the cached value to the host device 102, (iii) if the requested data unit is not stored in the cache (e.g., in case of a cache miss), it may read a page of data including the requested data unit from the non-volatile memory 116, and it may return the requested data unit to the host device 102 and store the requested data unit in the cache. Other caching operations may also be performed, as well as eviction operations, as discussed in further detail below. As used herein, a "data unit" is a set of contiguous bits, e.g., a byte, a 32-bit word, a 64 bit word, a cache line (64 bytes) or a page (e.g., 4 kB).

The cache controller 210 may include a controller or control circuit 225 (which may be a reduced instruction set computer (RISC), e.g., an Advanced RISC Machine (ARM), but other types of control circuits are envisioned), a history table 230 (e.g., a storage space for a history table), a metadata array 235 for storing a tag array and a cache line offset (CLO) array (e.g., a storage space for storing the tag array and a cache line offset array), and a selector 240 for selecting the data units of interest from a page of data when a page of data is read from the non-volatile memory 116. As mentioned above, the cache memory 215 may store data at finer granularity (e.g., it may store smaller data units) than the read granularity of the non-volatile memory 116, e.g., the cache memory 215 may store data at a granularity of one cache line (64 bytes). The history table 230 may store a list of recently used data units (e.g., a list of addresses of recently used data units).

When the storage device 104 receives a read command from the host device 102 for a first data unit (at a first address) it may, in the event of a cache miss, retrieve, from the non-volatile memory 116, the page containing the first data unit, and, as mentioned above, store the first data unit in the cache 205, and return the first data unit to the host device 102. The storage device 104 may discard the remainder of the retrieved page, or, in some circumstances the storage device 104 may store additional data units from the retrieved page in the cache 205. For example, the host device 102 may send, to the storage device 104 (either as part of the read command, or separately), a caching hint identifying a second address within the retrieved page. Such a caching hint may be a notification to the storage device 104 that the data unit at the second address is likely to be read soon, and, in response, the storage device 104 may also store, in the cache 205, the data unit at the second address. As another example, if the history table 230 contains an address (e.g., a third address) that is in the retrieved page, the data unit at the third address may also be stored in the cache 205. The history table 230 may be updated with the addresses of all evicted data units when data is evicted from the cache.

Caching hints may be generated by software running on the host device 102. For example, the operating system or the memory manager may include components monitoring data access patterns, and may have predictive capabilities that identify addresses likely to be accessed in the future. When such an address is identified, the host device 102 may send a caching hint to the storage device 104, the caching hint including the identified address, to increase the likelihood that the address will have been stored in the cache when it is next requested by the host device 102. Caching hints may also be generated by applications running on the host device 102. Such an application may be configured, by the software developer, to send a caching hint in advance of a need for a certain value, so that when the value is later read from the storage device 104, it will have been stored in the cache 205.

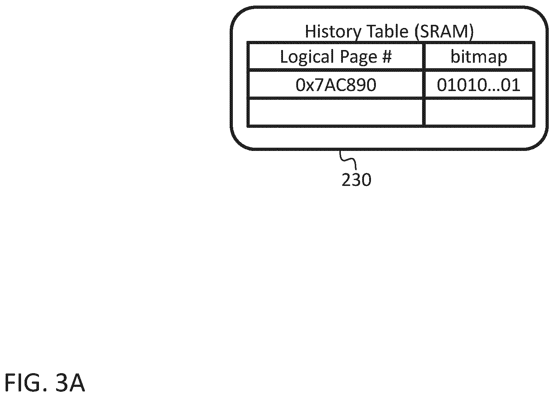

FIG. 3A shows the history table 230, which may be stored in static random access memory (SRAM). The history table 230 may store a list of pairs of numbers, the first number in each pair being a logical page number (corresponding to a page in the non-volatile memory 116) and the second number being a bit map. The bit map may include a one for every data unit that has previously been read from the page identified by the logical page number (and that is no longer stored in the cache 205). For example, if a page is 4 kB and a data unit is a cache line (so that each page includes 64 data units) then the bit map may have 64 bits, one for each cache line in the page.

In some embodiments, the storage device 104 implements two different caching schemes, in two respective independent corresponding portions of the cache 205, so that both data having low spatial locality and data having high spatial locality may be efficiently stored in the cache 205. A first portion of the cache 205 may be used to store less sparse data, e.g., data for which each page represented in the first portion of the cache 205 has more than one data unit stored in the cache 205. A second portion of the cache 205 may be used to store sparse data, e.g., data for which each page represented in the second portion of the cache 205 has only one data unit stored in the cache 205.

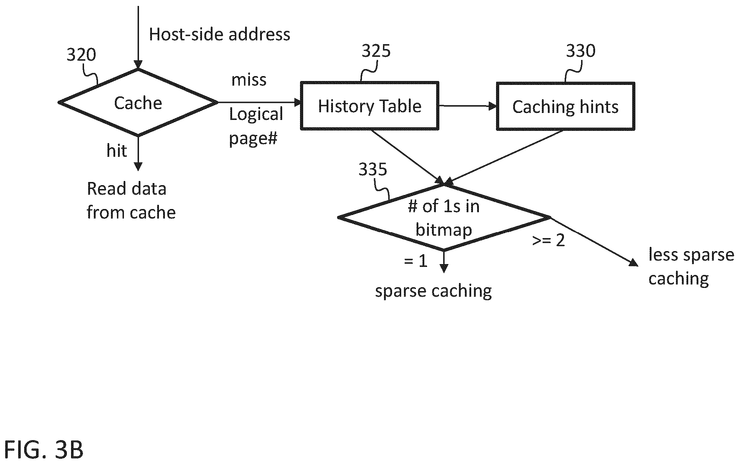

FIG. 3B is a flow chart of a method for selecting a caching scheme, in some embodiments. When a read command is received, including an address (or "host side address") to be read, the cache 205 is checked, at 320, and, if a cache hit occurs, the data requested by the host is read from the cache 205 (e.g., read from the cache memory 215) and returned to the host device 102. If a cache miss occurs, the page containing the requested data unit is read from non-volatile memory 116. The history table 230 is then checked, at 325 (resulting in a first bitmap for the page), and a list of caching hints is checked, at 330 (resulting in a second bitmap for the page), and the union of the results is generated (e.g., by OR'ing the first and second bitmap). In each of these bitmaps, each one bit may represent a cache line, within the page, that is to be stored in the cache. The caching scheme is then selected, at 335, based on the number of other data units, in the page, that are to be stored in the cache 205 (e.g., stored in the cache memory 215). For example, if the number of set bits in the bit map (e.g., in the union of the first bit map and the second bit map) is greater than a threshold (e.g., 1), then the first caching scheme (less sparse caching) may be used, and if the number of set bits in the bit map is less than or equal to the threshold (e.g., 1), then the second caching scheme (sparse caching) may be used. In some embodiments, space may be saved in the history table 230 by not storing entries for which the number of cache lines used (e.g., the number of set bits) is less than the threshold. In such an embodiment, the absence from the history table of an entry being evicted may imply that the number of ones for the entry is less than the threshold.

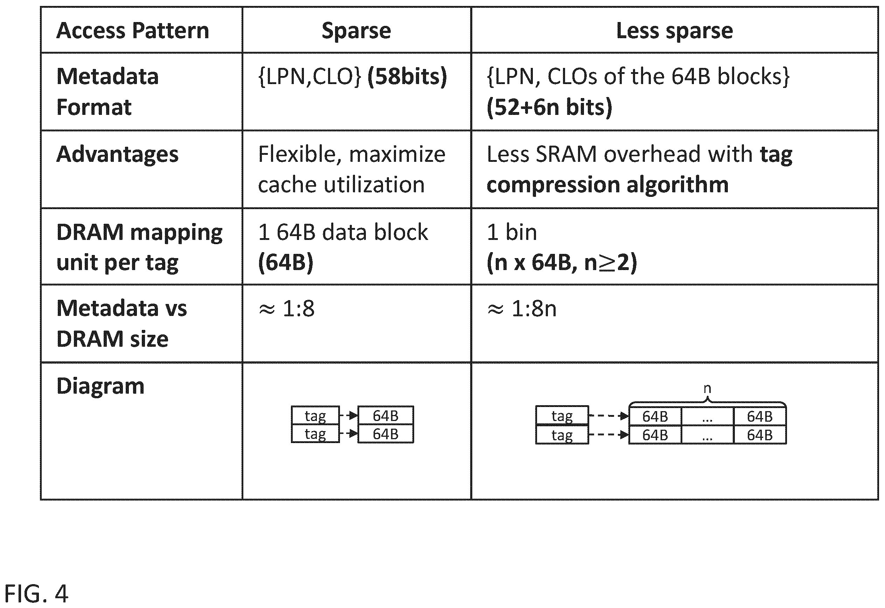

The host-side address format for a data unit may include, in order from least significant to most significant, six bits specifying the byte offset of the data unit, six bits specifying the cache line offset, and 52 bits specifying the logical page number. FIG. 4 shows characteristics of the first caching scheme (less sparse caching) and the second caching scheme (sparse caching), in some embodiments. In the less sparse caching scheme, all of the data units stored for a page may be stored in a corresponding bin in the cache memory 215. The number of such data units may be fixed and equal to n (where n is a positive integer, e.g., n = 4). The tag for each bin may include the logical page number of the page corresponding to the bin, and a cache line offset for each of the data units in the bin.

If fewer than n data units are identified for storage in the cache 205, then the tag and the storage area for the bin in the cache memory 215 may be padded, e.g., with one or more additional, replicates of the last meaningful cache line offset. In the data space, the remainder of the data space may be padded "implicitly" with a series of cache lines (64B blocks) that follow the last wanted or meaningful cache lines. This may result in some benefit from some spatial locality, if an application has a need to access nearby data in the future. If more than n data units are to be stored in the cache 205 for one page, then multiple bins may be used. As the table of FIG. 4 shows, the less sparse caching scheme may reduce the SRAM overhead (in embodiments in which the tag array and cache line offset array are stored in SRAM in the cache controller 210). In some embodiments, the tag array and cache line offset array for each portion of the cache 205 are instead stored in a content-addressable memory (CAM). In such an embodiment, the use of the less sparse caching scheme may reduce the CAM overhead. In such an embodiment, the data word that the content-addressable memory searches for is the logical page number. The use of a content-addressable memory may significantly accelerate the searching of the metadata array 235 to determine whether a cache hit or cache miss has occurred.

The cache organization for each of the portions of the cache may be direct mapped, set associative, or fully associative. The cache lookups in the different portions of the cache 205 may be executed in parallel. The metadata arrays 235 for the two portions of the cache 205 may be stored in different content-addressable memories, such that compared with a single cache implementation, no extra lookup latency is incurred for the accesses to the sparse portion of the cache 205, and only a few cycles of latency are incurred (while searching for cache line offsets) for accesses to the less-sparse portion of the cache 205. Within each portion of the cache 205, the optimal cache associativity can be determined based on area and latency constraints. The greater the associativity is, the larger the tag array may be. A two-step tag lookup process may be used in the less-sparse portion of the cache 205. This process may involve (i) extracting a tag and a set index from the logical page number (which may be a portion of the host side address), (ii) searching for the tag in the tag array corresponding to the set identified by the set index, (iii) if the tag is found, (i.e., in case of a cache hit), checking a valid bit associated with the tag , and, if it is set, retrieving a cache line offset, based on a decoded index formed from the tag. The process may then include, (iv) comparing the cache line offset that was retrieved to the cache line offset that is part of the host side address; if it matches, then (v) using the cache line offset and the tag value to select a location in the data array from which to retrieve the data unit.

In operation a cache miss may trigger (as discussed above in the context of FIG. 3B) (i) a page-size read operation from the non-volatile memory 116 and (ii) a process for determining which region of the cache 205 (sparse or less-sparse) the data unit or data units are to be stored in. Of these, only the read operation is on the critical path, and the process for determining which region of the cache 205 (sparse or less-sparse) the data unit or data units are to be stored in may be performed in the background. When data are evicted from the cache 205, the history table may be updated, as mentioned above. For example, the history table 230 may be updated to set each bit corresponding to a data unit being evicted from the cache 205; this may reflect a recent usage pattern of the storage device 104. Any suitable eviction policy, such as least recently used (LRU) may be used when evicting data from the cache 205. Similarly, a least recently used eviction policy may be used to periodically evict a portion of the contents of the history table 230.

Evictions in the first portion of the cache 205 may be performed at the bin granularity. For example, if data is to be evicted from the first portion of the cache 205, a victim bin may be selected (e.g., using a least recently used method), the addresses of the data units stored in the bin may be saved in the history table 230, and the bin may be freed (e.g., added to a list of free bins). Evictions in the second portion of the cache 205 may be performed as follows. A victim data unit may be selected (e.g., using a least recently used method), and the second portion of the cache 205 may be searched for other data units having addresses in the same page. These other data units may be counted, and if the total number of data units having addresses in the same page (i.e., the victim data unit and the other data units having addresses in the same page) exceeds a threshold (which may be referred to as an upgrade threshold), then, instead of the evicting the victim data unit, the victim data unit and the other data units having addresses in the same page are moved to the first portion of the cache 205. If the total number of data units having addresses in the same page is less than or equal to the upgrade threshold, then the victim data unit may be evicted, its address may be added to the history table 230, and the other data units having addresses in the same page may be left in place. The upgrade threshold may be set or changed by a suitable command or instructions sent by the host device 102 to the storage device 104.

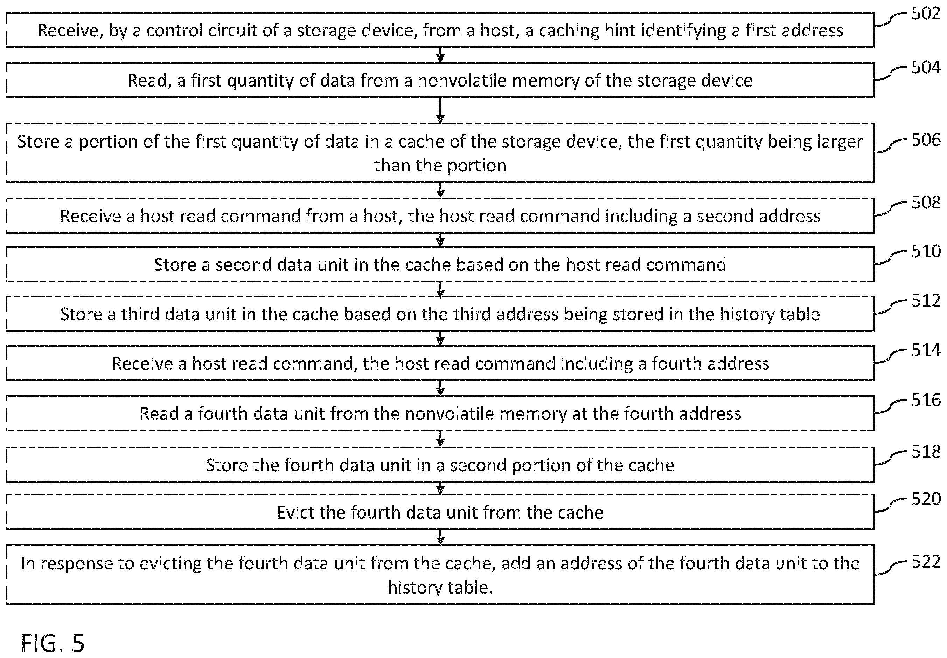

FIG. 5 shows a method of caching, in some embodiments. Although FIG. 5 illustrates various operations in a method of caching, embodiments according to the present disclosure are not limited thereto. For example, according to some embodiments, a method of caching may include additional operations or fewer operations, or the order of operations may vary (unless otherwise explicitly stated or implied) without departing from the spirit and scope of embodiments according to the present disclosure. The method of FIG. 5 includes receiving, by a control circuit of a storage device, from the host, at 502, a caching hint identifying a first address; reading, at 504, a first quantity of data from a non-volatile memory of the storage device; and storing, at 506, a portion of the first quantity of data in a cache of the storage device, the first quantity being larger than the portion, the portion including a first data unit, having an address equal to the first address. For example, as discussed above, the storage device 104 (e.g., the control circuit 225 of the storage device 104) may, in response to a host read command requesting a first data unit (e.g., a first cache line), read, from the non-volatile memory 116, a first quantity of data (e.g., a page of data (e.g., 4 kB of data)), and it may store, in the cache 205, less than the entire first quantity of data (e.g., less than the page of data).

For example, it may store one data unit (e.g., one cache line) or several data units (e.g., several cache lines) in the cache 205, as discussed in further detail in the examples below. The method may further include receiving, at 508, a host read command from a host, the host read command including a second address (e.g., the address of a second cache line requested by the host device 102); and storing, at 510, the second data unit (e.g., the second cache line) in the cache 205 based on the host read command. The method may further include storing, at 512, a third data unit (having a third address) in the cache 205 based on the third address being stored in a history table. The method may further include receiving, at 514, a host read command, the host read command including a fourth address; reading, at 516, a fourth data unit from the non-volatile memory at the fourth address; and storing, at 518, the fourth data unit in a second portion of the cache 205, independently of other data units (e.g., not sharing a bin nor a tag with other data units) in the second portion of the cache 205. The method may further include evicting, at 520, the fourth data unit from the cache 205; and, at 522, in response to evicting the fourth data unit from the cache 205, adding an address of the fourth data unit to the history table.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the term "or" should be interpreted as "and/or", such that, for example, "A or B" means any one of "A" or "B" or "A and B".

The background provided in the Background section of the present disclosure section is included only to set context, and the content of this section is not admitted to be prior art. Any of the components or any combination of the components described (e.g., in any system diagrams included herein) may be used to perform one or more of the operations of any flow chart included herein. Further, (i) the operations are example operations, and may involve various additional steps not explicitly covered, and (ii) the temporal order of the operations may be varied.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the spirit and scope of the inventive concept.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

It will be understood that when an element is referred to as being "directly connected" or "directly coupled" to another element, there are no intervening elements present. As used herein, "generally connected" means connected by an electrical path that may contain arbitrary intervening elements, including intervening elements the presence of which qualitatively changes the behavior of the circuit. As used herein, "connected" means (i) "directly connected" or (ii) connected with intervening elements, the intervening elements being ones (e.g., low-value resistors or inductors, or short sections of transmission line) that do not qualitatively affect the behavior of the circuit.

Some embodiments may include features of the following numbered statements.

### DESCRIPTION FOR REFERENCE NUMERALS

100: SYSTEM
102: HOST DEVICE
104: STORAGE DEVICE
106: HOST INTERFACE
108: HOST PROCESSOR
110: HOST MEMORY
112: STORAGE CONTROLLER
114: STORAGE MEMORY
116: NON-VOLATILE MEMORY
117: MEMORY DIES
118: STORAGE INTERFACE

1. A storage device, comprising:
   a control circuit;
   non-volatile memory; and
   a cache,
   wherein the control circuit is configured:
      to receive, from a host, a caching hint identifying a first address,
      to read a first quantity of data from the non-volatile memory, and
      to store a portion of the first quantity of data in the cache,
   wherein the first quantity is larger than the portion, the portion including a first data unit, having an address equal to the first address.
2. The storage device of statement 1, wherein:
   the portion of the first quantity of data further includes a second data unit having a second address, and
   the control circuit is further configured:
      to receive a host read command from the host, the host read command including the second address, and
      to store the second data unit in the cache based on the host read command.
3. The storage device of statement 1 or statement 2, wherein the storing of the portion of the first quantity of data in the cache comprises:
   storing the portion of the first quantity of data in a first portion of the cache, and
   storing the first data unit and the second data unit together in a bin of the first portion of the cache.
4. The storage device of any one of the preceding statements, wherein:
   the portion of the first quantity of data further includes a third data unit having a third address,
   the third address is stored in a history table, and
   the control circuit is further configured to store the third data unit in the cache based on the third address being stored in the history table.
5. The storage device of statement 4, wherein the storing of the portion of the first quantity of data in a first portion of the cache comprises storing the portion of the first quantity of data in a first portion of the cache based on:
   the caching hint, or
   the first address being stored in the history table.
6. The storage device of statement 4, wherein the control circuit is further configured:
   to receive a host read command, the host read command including a fourth address,
   to read a fourth data unit from the non-volatile memory at the fourth address, and
   to store the fourth data unit in a second portion of the cache,
   the storing of the fourth data unit in the second portion of the cache comprising storing the fourth data unit independently of other data units.
7. The storage device of statement 6, wherein the control circuit is further configured:
   to evict the fourth data unit from the cache, and
   in response to evicting the fourth data unit from the cache, to add an address of the fourth data unit to the history table.
8. A method, comprising:
   receiving, by a control circuit of a storage device, from a host, a caching hint identifying a first address;
   reading, a first quantity of data from a non-volatile memory of the storage device; and
   storing a portion of the first quantity of data in a cache of the storage device,
   wherein the first quantity is larger than the portion, the portion including a first data unit, having an address equal to the first address.
9. The method of statement 8, wherein:
   the portion of the first quantity of data includes a second data unit having a second address, and
   the method further comprises:
      receiving a host read command from a host, the host read command including the second address; and
      storing the second data unit in the cache based on the host read command.
10. The method of statement 8 or statement 9, wherein the storing of the portion of the first quantity of data in the cache comprises:
   storing the portion of the first quantity of data in a first portion of the cache; and
   storing the first data unit and the second data unit together in a bin of the first portion of the cache.
11. The method of any one of statements 8 to 10, wherein:
   the portion of the first quantity of data includes a third data unit having a third address;
   the third address is stored in a history table; and
   the method further comprises storing the third data unit in the cache based on the third address being stored in the history table.
12. The method of statement 11, wherein the storing of the portion of the first quantity of data in a first portion of the cache comprises storing the portion of the first quantity of data in a first portion of the cache based on:
   the caching hint, or
   the first address being stored in the history table.
13. The method of statement 11, wherein the method further comprises:
   receiving a host read command, the host read command including a fourth address;
   reading a fourth data unit from the non-volatile memory at the fourth address; and
   storing the fourth data unit in a second portion of the cache,
   the storing of the fourth data unit in the second portion of the cache comprising storing the fourth data unit independently of other data units.
14. The method of statement 13, further comprising:
   evicting the fourth data unit from the cache; and
   in response to evicting the fourth data unit from the cache, adding an address of the fourth data unit to the history table.
15. A system, comprising:
   a host; and
   storage device,
   the storage device comprising:
      non-volatile memory; and
      a cache,
   wherein the storage device is configured:
      to receive, from a host, a caching hint identifying a first address,
      to read a first quantity of data from the non-volatile memory, and
      to store a portion of the first quantity of data in the cache,
      wherein the first quantity is larger than the portion, the portion including a first data unit, having an address equal to the first address.
16. The system of statement 15, wherein:
   the portion of the first quantity of data includes a second data unit having a second address, and
   the storage device is further configured:
      to receive a host read command from a host, the host read command including the second address, and
      to store the second data unit in the cache based on the host read command.
17. The system of statement 15 or statement 16, wherein the storing of the portion of the first quantity of data in the cache comprises:
   storing the portion of the first quantity of data in a first portion of the cache, and
   storing the first data unit and the second data unit together in a bin of the first portion of the cache.
18. The system of any one of statements 15 to 17, wherein:
   the portion of the first quantity of data includes a third data unit having a third address,
   the third address is stored in a history table, and
   the storage device is configured to store the third data unit in the cache based on the third address being stored in the history table.
19. The system of statement 18, wherein the storing of the portion of the first quantity of data in a first portion of the cache comprises storing the portion of the first quantity of data in a first portion of the cache based on:
   the caching hint, or
   the first address being stored in the history table.
20. The system of statement 18, wherein the storage device is further configured:
   to receive a host read command, the host read command including a fourth address,
   to read a fourth data unit from the non-volatile memory at the fourth address, and
   to store the fourth data unit in a second portion of the cache,
   the storing of the fourth data unit in the second portion of the cache comprising storing the fourth data unit independently of other data units.

Although exemplary embodiments of a system and method for caching in a storage device have been specifically described and illustrated herein, many modifications and variations will be apparent to those skilled in the art. Accordingly, it is to be understood that a system and method for caching in a storage device constructed according to principles of this disclosure may be embodied other than as specifically described herein. The invention is also defined in the following claims.

## Claims

1. A storage device, comprising:
a control circuit;
non-volatile memory; and
a cache,
wherein the control circuit is configured:
to receive, from a host, a caching hint identifying a first address,
to read a first quantity of data from the non-volatile memory, and
to store a portion of the first quantity of data in the cache,
wherein the first quantity is larger than the portion, the portion including a first data unit, having an address equal to the first address.

2. The storage device of claim 1, wherein:
the portion of the first quantity of data further includes a second data unit having a second address, and
the control circuit is further configured:
to receive a host read command from the host, the host read command including the second address, and
to store the second data unit in the cache based on the host read command.

3. The storage device of claim 2, wherein the storing of the portion of the first quantity of data in the cache comprises:
storing the portion of the first quantity of data in a first portion of the cache, and
storing the first data unit and the second data unit together in a bin of the first portion of the cache.

4. The storage device of claim 2 or 3, wherein:
the portion of the first quantity of data further includes a third data unit having a third address,
the third address is stored in a history table, and
the control circuit is further configured to store the third data unit in the cache based on the third address being stored in the history table.

5. The storage device of claim 4, wherein the storing of the portion of the first quantity of data in a first portion of the cache comprises storing the portion of the first quantity of data in a first portion of the cache based on:
the caching hint, or
the first address being stored in the history table.

6. The storage device of claim 4 or 5, wherein the control circuit is further configured:
to receive a host read command, the host read command including a fourth address,
to read a fourth data unit from the non-volatile memory at the fourth address, and
to store the fourth data unit in a second portion of the cache,
the storing of the fourth data unit in the second portion of the cache comprising storing the fourth data unit independently of other data units.

7. The storage device of claim 6, wherein the control circuit is further configured:
to evict the fourth data unit from the cache, and
in response to evicting the fourth data unit from the cache, to add an address of the fourth data unit to the history table.

8. A method, comprising:
receiving, by a control circuit of a storage device, from a host, a caching hint identifying a first address;
reading, a first quantity of data from a non-volatile memory of the storage device; and
storing a portion of the first quantity of data in a cache of the storage device,
wherein the first quantity is larger than the portion, the portion including a first data unit, having an address equal to the first address.

9. The method of claim 8, wherein:
the portion of the first quantity of data includes a second data unit having a second address, and
the method further comprises:
receiving a host read command from a host, the host read command including the second address; and
storing the second data unit in the cache based on the host read command.

10. The method of claim 9, wherein the storing of the portion of the first quantity of data in the cache comprises:
storing the portion of the first quantity of data in a first portion of the cache; and
storing the first data unit and the second data unit together in a bin of the first portion of the cache.

11. The method of claim 9 or 10, wherein:
the portion of the first quantity of data includes a third data unit having a third address;
the third address is stored in a history table; and
the method further comprises storing the third data unit in the cache based on the third address being stored in the history table.

12. The method of claim 11, wherein the storing of the portion of the first quantity of data in a first portion of the cache comprises storing the portion of the first quantity of data in a first portion of the cache based on:
the caching hint, or
the first address being stored in the history table.

13. The method of claim 11 or 12, wherein the method further comprises:
receiving a host read command, the host read command including a fourth address;
reading a fourth data unit from the non-volatile memory at the fourth address; and
storing the fourth data unit in a second portion of the cache,
the storing of the fourth data unit in the second portion of the cache comprising storing the fourth data unit independently of other data units.

14. The method of claim 13, further comprising:
evicting the fourth data unit from the cache; and
in response to evicting the fourth data unit from the cache, adding an address of the fourth data unit to the history table.

15. A system, comprising:
a host; and
the storage device of any one of claims 1 to 7.
